# EUROPEAN PATENT APPLICATION

(11) **EP 2 736 217 A2**
(43) Date of publication of application: **28.05.2014**
(21) Application number: 13159397.2
(22) Date of filing: 15.03.2013
(51) Int. Cl.: H04L 29/06, H04W 4/00

(54) **Cloud-based NFC content sharing**

(30) Priority: 26.11.2012 US 201261730003 P
(71) Applicant: BlackBerry Limited, Waterloo, ON N2K 0A7 (CA)
(72) Inventor: McLellan, Candice Jane, Waterloo, Ontario N2L 3W8 (CA); Moosavi, Vahid, Waterloo, Ontario N2L 3W8 (CA)
(74) Representative: Patel, Binesh

(57) **Abstract**

Systems, methods, devices, and computer programming products for NFC-enabled sharing of data files stored by networked computing resources, according to a variety of selectable criteria.

## Description

### Cross Reference to Related Applications

This application claims all benefit, including priority, of United States Provisional Patent Application Serial No. 61/730,003, filed 26 November 2012 and entitled Cloud-Based NFC Content Sharing, the entire contents of which are incorporated herein by this reference.

### Field of the Disclosure

This application relates to the field of communications, and more particularly, to Near Field Communications (NFC) and other short range wireless communications protocols.

### Background

A recent trend in mobile communications has been to incorporate Near Field Communication (NFC) and other short-range wireless communications protocols into mobile devices and other communications systems and components. NFC and other short-range communications devices can initiate and execute fully and/or semiautomatic wireless data transfers by being brought into or otherwise placed in sufficiently close proximity, or in some embodiments by brief, controlled contact, or device "kissing."

Systems, devices, and methods adapted for NFC and other short-range communications processes can be applied in a wide variety of uses. Such uses can, for example, include the sharing of data files and other information among groups of people (for example, families, friends, and/or business entities, colleagues or contacts) by means of improved mechanisms and processes for sharing of files and folders comprising still and video audio images, audio recordings, text or multi-media documents, etc. using cloud-based and other storage devices accessible by pluralities of NFC-enabled devices, according to various user-selected criteria.

Accordingly, there is a need for further improved mechanisms and processes for sharing content.

### Summary

In accordance with an aspect of the present invention there is provided a method, performed by a near-field communication (NFC) enabled device, comprising: using an NFC data transfer, authorizing sharing of a set of data files with a second NFC-enabled device; acquiring at least one file to be shared with the second NFC-enabled device, and associating the at least one file with an identifier indicating that the file is eligible to be shared; and uploading at least one file identified as eligible for sharing with the second NFC-enabled device to a networked storage resource, for storage in a shared folder accessible by the second NFC-enabled device.

In accordance with other aspects of the present invention there are provided methods, performed by a networked storage resource, comprising: receiving over a communications network, from a first NFC-enabled device, at least one data file, the data file associated with an identifier authorizing at least a second NFC-enabled device eligible to access the data file; storing the at least one received data file in secure, persistent storage; receiving over the communications network a request from at least the second NFC-enabled device for at least read access to the at least one stored data file; and based at least partly on a comparison of the identifier with at least one access criterion, either authorizing at least read access to the at least one stored data file by at least the second NFC-enabled device or denying access to the at least one stored data file by at least the second NFC-enabled device.

In accordance with other aspects of the present invention, NFC-enabled devices, networked storage resources, and computer program products are provided implementing the described methods.

### Description of drawings

Examples of various aspects and embodiments of the invention are shown in the drawings, and described therein and elsewhere throughout the disclosure. In the drawings, like references indicate like parts.

Figures 1-3 and 5 are schematic diagrams of systems and devices useful in implementing various aspects of the disclosure.

Figure 4 is a schematic flow diagram showing an example of a process for sharing data files in accordance with the disclosure.

Figures 6-8 are schematic diagrams of user interfaces that can be displayed by NFC-enabled devices in implementing aspects of the disclosure.

### Detailed Description

In various aspects, the disclosure provides systems, methods, devices, and computer programming products for NFC-enabled sharing of data files stored by networked computing resources, according to a variety of selectable criteria. For example, the disclosure enables sharing of data files and other information among groups of people (for example, families, friends, and/or business entities, colleagues or contacts) by means of improved mechanisms and processes for sharing of files and folders comprising still and video audio images, audio recordings, text or multi-media documents, etc. using cloud-based and other storage devices accessible by pluralities of NFC-enabled devices, according to various user-selected criteria.

For example, in a first aspect, the disclosure provides methods, performed by a near-field communication (NFC) enabled device, comprising: using an NFC data transfer, authorizing sharing of a set of data files with a second NFC-enabled device; acquiring at least one file to be shared with the second NFC-enabled device, and associating the at least one file with an identifier indicating that the file is eligible to be shared; and uploading at least one file identified as eligible for sharing with the second NFC-enabled device to a networked storage resource, for storage in a shared folder accessible by the second NFC-enabled device.

In another aspect, the disclosure provides methods, performed by a networked storage resource, comprising: receiving over a communications network, from a first NFC-enabled device, at least one data file, the data file associated with an identifier authorizing at least a second NFC-enabled device eligible to access the data file; storing the at least one received data file in secure, persistent storage; receiving over the communications network a request from at least the second NFC-enabled device for at least read access to the at least one stored data file; and based at least partly on a comparison of the identifier with at least one access criterion, authorizing at least read access to the at least one stored data file by at least the second NFC-enabled device.

In another aspect, with respect of the aforementioned method, the networked storage resource may, instead of or in addition to authorizing read access to at least one NFC-enabled device, deny access to the at least one stored data file by at least the second NFC-enabled device.

In another aspect, the disclosure provides NFC-enabled devices comprising: a processor; a medium or media including machine-readable instructions executable by the processor to: use an NFC data transfer to authorize sharing of a set of data files with a second NFC-enabled device; acquire at least one file to be shared with the second NFC-enabled device, and associate the at least one file with an identifier indicating that the file is eligible to be shared; and upload at least one file identified as eligible for sharing with the second NFC-enabled device to a networked storage resource, for storage in a shared folder accessible by the second NFC-enabled device.

In another aspect, the disclosure provides networked storage resources comprising: a processor; a medium or media including machine-readable instructions executable by the processor to: receive over a communications network, from a first NFC-enabled device, at least one data file, the data file associated with an identifier authorizing at least a second NFC-enabled device eligible to access the data file; store the at least one received data file in secure, persistent storage; receive over the communications network a request from at least the second NFC-enabled device for at least read access to the at least one stored data file; and based at least partly on a comparison of the identifier with at least one access criterion, authorize at least read access to the at least one stored data file by at least the second NFC-enabled device.

In other aspects, the disclosure provides computer program products having a non-transitory computer readable medium tangibly embodying computer executable code which, when executed by a processor of a NFC-enabled device or networked storage resource, causes the respective device or resource to perform the aforementioned methods.

Criteria suitable for use in implementing these and other aspects of the invention comprise any one or more of geographic or other locations, file types, current times (including dates), elapsed times, PINs and other personal identifiers, and device identifiers.

Near-field communication(s) (NFC) are wireless communications between two or more suitably-configured devices when the devices are placed or otherwise disposed within a desired, typically relatively proximity to one another. Such communications can, for example, be initiated on a fully or partially automatic basis when the two or more devices are placed within desired proximity of one another, and can occur between any two or more of active and/or passive NFC devices.

As will be appreciated by those skilled in the relevant arts, once they have been made familiar with this disclosure, NFC communications in accordance with this disclosure can be conducted according to any suitable protocols, including a number of protocols now in widespread public use, as well as protocols yet to be developed.

In general, an NFC transaction, or data transfer, may be initiated by bringing two or more NFC-enabled devices into close proximity of one another. "Close proximity" can, as will be apparent to those skilled in the relevant arts, once they have been made familiar with this disclosure, mean any proximity suitable to a desired purpose, and typically means sufficiently close that it may be presumed that communications between the two or more NFC devices is desired. For current NFC applications, for example, "close proximity" can mean one or several centimeters, or shorter or longer distances, depending for example upon the purpose and nature of the NFC transaction and the NFC-enabled devices. The action of bringing such NFC-enabled devices into sufficiently close proximity may trigger automatic or semiautomatic activation of an NFC circuit, and/or an NFC communication. A NFC transaction, or NFC data transfer, may include one NFC-enabled device transferring data to the other, or two or more devices each transferring and/or receiving data from at least one of the other devices. Where devices both transmit and receive data from one another through an NFC transaction, this may be called a NFC data interchange.

For purposes of this disclosure, NFC communications may be conducted according to any desired wireless communications protocol(s), including for example those published or otherwise adopted by the various NFC and/or Radio Frequency Identification (RFID) industry federations, councils, groups, and boards, and their members, as well as any or all of Bluetooth or WIN wireless protocols, including for example any or all of Code Division Multiple Access (CDMA), Time Division Multiple Access (TDMA), Frequency Division Multiple Access (FDMA), Orthogonal Frequency Division Multiple Access (OFDMA), Single Carrier Frequency Division Multiple Access (SC-FDMA), GSM, 3GPP, 4G, or other wireless protocols.

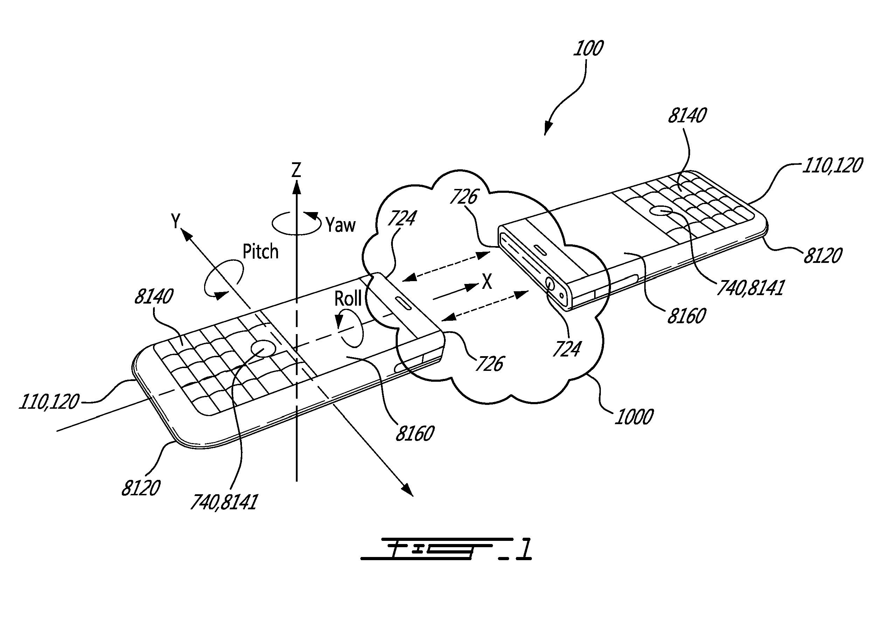

An example of an NFC system 100 suitable for use in implementing various aspects of the disclosure is shown in Figure 1. In the embodiment shown in Figure 1, system 100 comprises two active NFC devices 110, in the form of smartphones or other wireless handheld or mobile devices 120. Bringing active NFC-capable devices 110, 120 close enough together, by for example moving them physically toward each other into very close proximity, or into actual physical contact, can provide an operationally easy interface to set up, and initiate a wireless NFC connection.

For example, in the embodiment illustrated in Figure 1, relative movement of the devices 110, 120 toward one another may induce the Hall effect in a magnetic field sensor incorporated within one or both of the devices, and so trigger execution of an NFC query and authorization process and, conditioned upon authorization, establishment of a uni- or bi-directional wireless communication session between the devices. In one non-limiting example, one or both of devices 110, 120 is provided with either a magnet 724 or a magnetometer, i.e., a magnet sensor 726, such as a Hall effect sensor or magneto-resistive sensor, or both. The devices 724, 726 may be matched in a single touch or other gesture adapted to bring the devices into suitably close proximity (sometimes termed a "kiss" gesture because the two devices 110, 120 typically touch or "kiss" each other or are very close and in adjacent proximity).

An example of a suitable proximity for such embodiments may be in the range of about 10 to 20 mm, but the range may be more or less depending on the strength of the magnets and the purposes for which the device(s) 110, 120 and/or system 100 is intended. The sensor(s) 726 on each device 110, 120 may be aligned to the magnet on the respective other device, as illustrated in Figure 1. One or both of the sensors 726 senses ("sees") the corresponding magnet 724 pursuant to the Hall effect, causing a voltage variation or other signal to be generated by the sensor and transmitted to a processor, so as to activate an NFC circuit to communicate with the other device using the protocol of an associated NFC Stack or other wireless communication(s) subsystem or device(s). The devices 110 can then communicate with each other using any NFC protocol suitable for the intended purpose.

Establishment of NFC communications sessions between the devices 110, 120 can be conditioned on suitably-adapted authorizations, using, for example, PIN numbers and/or other security keys.

Interaction between active NFC devices 110 as shown, for example, in Figure 1, can be considered peer-to-peer NFC interactions.

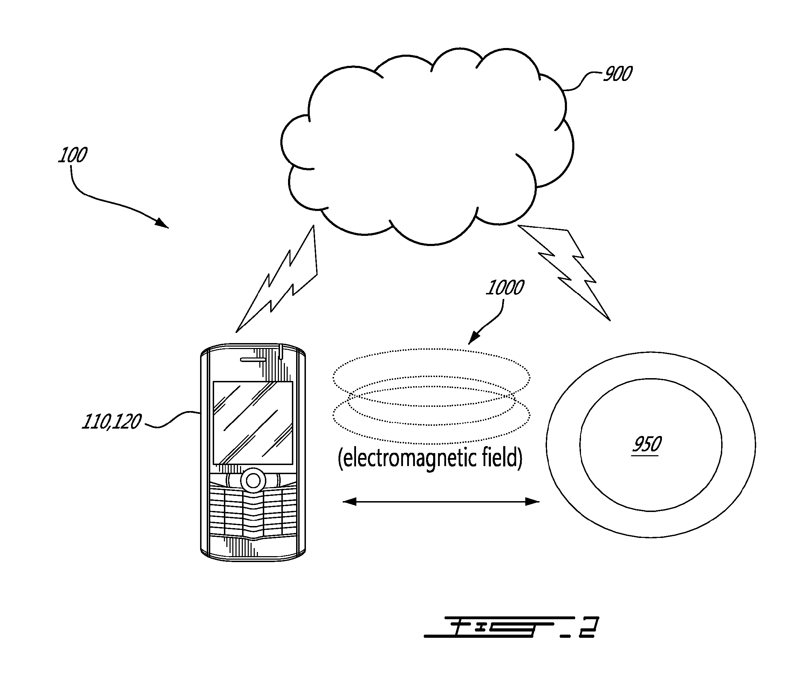

Figure 2 illustrates an example of another NFC system 100 suitable for use in implementing various aspects of the disclosure. In the embodiment shown in Figure 2, system 100 comprises an active NFC device 110, in the form of a smartphone or other wireless handheld or mobile device 120, and a passive NFC device 950 such as an RFID or other NFC tag, which may for example be attached to an NFC poster, or 'smart' poster. Bringing an active NFC-capable device 110, 120 close enough to a passive device 950 such as a tag embedded within or otherwise attached to a poster can cause query, authorization, and/or data transfer processes to fully or semi-automatically execute using magnets, Hall effect sensors, and/or other proximity-detecting mechanisms as described above and elsewhere herein.

A passive NFC device 950 in accordance with the invention can comprise memory(ies), including both volatile and persistent (i.e., non-transient) media for storing data readable by active NFC (i.e., wireless) device(s) 110, 112. Data stored by passive device(s) 950 and read by active device(s) 110, 112 can include any data suitable for desired purpose(s). For example, a passive device 950 affixed to an informational document such as an advertising or instructional poster can store, for reading by one or more active device(s) 110, any information desired to be imparted to the device(s) 110 and/or users thereof. For example, a device 950 affixed to an advertising poster can store information related to a product, such as an item of clothing, an entertainment event, or a food product purchasable by a user of a device 110.

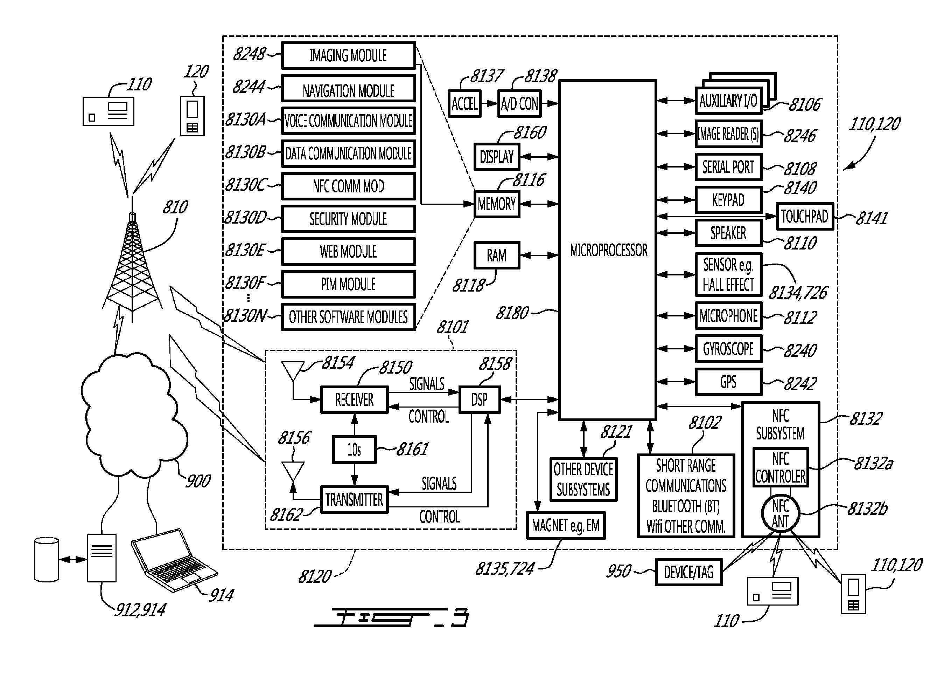

Alternatively, or in addition, a device 950 can store data such as a uniform resource locator (URL) or other address information, such as a telephone number, readable by active device(s) 110 and suitable for directing a processor associated with the device(s) 110 to establish one or more uni- or multi-direction communications sessions with commonly-controlled and/or third-party resources via one or more networks 900, as shown in Figures 2 and 3.

Such networked resources can, for example, include vendor, enterprise, or other servers, computers, smartphones, etc.

A somewhat more general embodiment of a system 100 for implementing aspects of the disclosure is shown schematically in Figure 3. In the embodiment of Figure 3, an active wireless handheld device 110, 120 is configured for communication with a wide variety of external devices via a number of communications (sub)systems. For example, using an NFC (sub)system 8132, the device 110 is configured to communicate with any one or more of passive NFC device(s) 950, such as RFID or other NFC tags; optionally non-mobile active device(s) 110, such as stationary computers or other devices, including for example vendor point-of-sale transaction devices); and/or NFC-capable mobile devices 120 such as smartphones and/or laptop, palmtop, and/or tablet computers.

As explained further below, the device 110, 120 shown in Figure 3 is further capable, via wireless communications (sub)system 8101, of communicating with a wide range of devices, including for example server(s) 912 and/or other computers 914 via the internet, the public switched telephone network (PSTN) and/or other wired wide-area or local-area public or private network(s) 900, and/or one or more smartphones, computers 914, servers 912, and other active systems 110 via cellular and/or other wireless telephone networks. For example, an active NFC device 110, 120 may be communicatively coupled to one or more wireless local area networks (WLANs), such as a Wireless Fidelity (WiFi) network, or a wireless wide area network (WWAN) such as 3GPP or 4G Long Term Evolution (LTE) network (not shown). By way of non-limiting example, and as will be appreciated by those skilled in the relevant arts, WiFi is typically deployed as a WLAN that may extend home and business networks to wireless medium and may follow an IEEE 802.11 or other standard. A wireless communications connection may also be established using, for example, short-range communications subsystems which may include an infrared device and associated circuits and components as described above, or a Bluetooth communications module, to provide for communication with similarly-enabled systems and devices as well as the NFC communications.

Figure 3 shows a non-limiting example of a range of various functional components that may be included in an exemplary handheld or other mobile wireless communications device 120. In the example shown, device 110, 120 includes, among other components, housing(s) 8120; input device(s) such as keypad(s) 8140, touchpads 8141/740, microphone(s) 8112, accelerometer(s) 8137, analog/digital (a/d) converter(s) 8138, touchscreen display(s) 8160, hall effect or other field/proximity sensor(s) 8134, 726, gyroscope(s) 8240, global positioning system(s) (GPS(s)) 8242, and optical or image reader(s) 8246, such as one or more digital still and video cameras and/or barcode readers, quick response (QR) readers, or other scanners; output device(s) such as touchscreen or other display(s) 8160, speakers(s) 8110, and magnet(s) or other field/proximity generator(s) 8135, 724; and input/output (1/0) device(s) such as uniform serial bus (USB) auxiliary input/output port(s) 8106, parallel or serial port(s) 8108, NFC (sub)system(s) 8132, including Bluetooth and/or other short-range communication (sub)system(s), and wireless/radio transceiver (sub)system(s) 8101.

As will occur to those skilled in the relevant arts, device(s) 110, 120 may include any of a wide variety of these and other components and (sub)systems, in any desired combination(s); and they may interact in any of a wide variety of ways, in addition to those described herein.

As will further be understood by those skilled in the relevant arts, handheld device(s) 120 can comprise any of a very wide range of mobile devices, including for example cellphones, smartphones, and other radio-based communications devices, as well as laptop, palmtop, and tablet computers. "Handheld" means portable and operable using one or both hands; and, in the case of smart phones, can but does not necessarily mean devices that are roughly the size of an average human palm.

One or more processors 8180, 8158, 8138, 8132(a), etc., working singly or in any desirable or otherwise suitable combinations, can use inputs generated and/or otherwise provided by any one or more of the various input device(s) input device(s) 8140, 8141 / 740, 8112, 8137, 8138, 8160, 8134/726, 8240, 8242, 8246, 8106, 8108, 8132, 8101 and locally and/or remotely-accessible peripheral devices, such as printers, servers, telephones, computers, etc., to generate, according to suitably-configured logic rules, output signals suitable for processing by any one or more of the various output device(s) 8160, 8110, 8135 / 724, 8106, 8108, 8132, 8101, and locally and/or remotely-accessible peripheral devices, etc..

Any or all of processor(s) 8180, 8158, 8138, 8132(a), etc., along with any other desired components and/or (sub)systems incorporated, by a device 120 may be protectively and/or functionally contained within housing 8120(s) coupled, as for example by means of suitably-configured buses, etc., between the various memory, input, output, and auxiliary devices (such as battery(ies), solar power generators, etc) in order to perform the functions disclosed herein. Processor(s) 8180, 8158, 8138, 8132(a) may be of any suitable form(s). For example, CPU(s) 8180 may comprise one or more microprocessors chip contained on or otherwise attached to one or more circuit boards within housing(s) 8120. CPU(s) 8180 can provide general command and control functions including, for example, operation of the display 8160, as well as the overall operation of the mobile device 810, in response to received information and inputs, such as in response to actuation of keys on the keypad 8140 by the user. Processors, 8158, 8138, 8132(a), etc., may be provided to control specialized functions such as operation of NFC and other particular communications channels.

Logic rules suitable for use by processors 8180, 8158, 8138, 8132(a) in generating such outputs can be accessed from any suitable locally and/or remotely located source(s), including, for example, any one or more applications modules 8130A - N, 8244, 8248, etc., as, for example, explained herein. Such rules and modules can be provided in any form(s) suitable for achieving the purposes addressed herein, including for example software instructions stored in transient (volatile) and/or non-transient (persistent) memory, firmware, and hard-programmed hardware device(s) or component(s).

Memory(ies) 8118, 8116, etc., which can be of any form compatible with the purposes disclosed herein, including, for example, flash, EEPROM, RAM, ROM, disk, register, etc., can be accessed, controlled, and otherwise used 8180, 8158, 8138, 8132(a), etc., for reading data used in the various processes described herein, for storing output so generated, and for holding executable forms of suitably-configured application and/or module instruction sets. Such stored data may, for example include operating system and other software executed by the processing device 8180.

As shown in Figure 3, an active NFC device 110 can comprise multiple communications abilities, and thus may have the ability to conduct concurrent communications sessions with other devices 110, 950, 912, 914, etc., using NFC voice, and/or other communication means. For example, as illustrated, NFC capable device 110 may be engaged in peer-to-peer communication with a second NFC capable device 110, while also communicating with a baseband access point 912, 914, which may take the form of a cellular base station, for example.

Long-range (e.g., cellular) voice and/or text communications processes may be provided for an active device 110,120 by one or more wireless communications subsystems 8101, comprising transmitter(s) 8152, 8156, receiver(s) 8150, 8154, and digital signal processor(s) (DSP(s)) 8158.

Short-range communications may be provided by either or both of NFC subsystem(s) 8102, 8132, which may or may comprise dedicated antenna systems for short-range aspects; specialized memory device(s) 8116, 8118, and other device subsystems 8121.

Mobile device(s) 110, 120 in accordance with the disclosure may therefore be considered, in the examples shown, example, two-way RF communications devices having voice and data communications capabilities using RF circuitry. In addition, the mobile device 110, 120 may have the capability to communicate with other computer systems 110, 912, 914, etc., via the Internet or other network(s) 900. For example, a device 110, 120 may communicate with one or more servers 912, such as Internet servers, via RF subsystems 8101 and the associated components, including web module 8130e, and further via short-range communications subsystem(s) 8102, such as via web/browser module(s) 8130e. System(s) 8102 may include, for example, one or more Bluetooth communications modules for establishing Bluetooth wireless connection(s), and other communications modules, such as infrared modules or devices, WiFi circuits and modules, and associated components and circuits that may also form part of the RF circuitry.

A predetermined set of applications that control basic and optional device operations, such as data and voice communications 8130A and 81306, may be installed on the device 110,120 during manufacture. Application modules 813OA-N may include native and non-native modules for security 8130D, Web interaction 8130E, social interactions or applications, and the like.

NFC communications module(s) 8130C may include hardware and/or software to enable NFC controller(s) 8132A (which may themselves include hardware, software, and firmware a required) and with the microprocessor 8180, to perform NFC communications tasks, such as through the memory 8116, NFC communications module(s) 8130C may, in various embodiments, support responsive operability for tag 950 reads/writes, whether virtual or physical, by interacting with other modules and apps to affect data stored on tag(s) 950, and/or to obtain or write tag data. Such other modules may for example include web module 8130E, PIM module 8130F, and other software modules 8130N (such as apps and video players, by way of non-limiting examples). Microprocessor(s) 8180 may also cooperate with NFC module(s) 8130C, and with NFC subsystem(s) 8132, which may include one or more NFC chips comprising NFC controller(s) 8132a, and antenna(s) 8132b to facilitate communications with other active and/or inactive NFC device(s) 110, 950, as discussed herein. For example, an NFC communications module 8130C may allow a microprocessor 8180 to control the NFC subsystem 8132 and/or memory stores 8116, 8118.

NFC chips suitable for use in implementing aspects of the disclosure may, for example, comprise one or more PN531 microcontroller-based transmission modules produced by Koninklijke Phillips Electronics N.V. Such NFC chips 8132a may, for example, include both digital and analog circuitry, and one or more contactless Universal Asynchronous Receiver Transmitters (UARTs), cores, and host interfaces. Incorporated circuitry may include output drivers, integrated demodulators, bit decoders, mode detectors and RF-, magnetic, and/or level detectors as suitable. Suitable contactless UARTs may include elements for data processing, Cyclical Redundancy Checking (CRC), parity generation, framing generation and check bit coding and decoding, and/or other functions. Cores may, for example, include one or more 80C51 microcontroller, 32 Kbytes or other amounts of ROM and, one Kbyte or other amounts of RAM, for example. A set of host interfaces may interface with the microprocessor and interface according to such known standards as 12C, serial UART, SPI and USB. NFC circuits may be tuned to any frequency(ies) suitable for accomplishing the purposes disclosed herein, as for example about 13.56 MHz.

NFC (sub)system(s) 8132 may include and/or otherwise cooperate with one or more magnets/magnetometers or other magnet sensors 8134, such as Hall effect sensors, communicatively connected to the microprocessor 8180, 8132a. Sensor(s) 8134 may include components suitable for operation as a Hall effect sensor, including any necessary coils or other circuits. There is also illustrated a magnet/magnetometer 8135 that, in various embodiments, may be advantageously be provided in the form of one or more electromagnets and may operates with microprocessor(s) 8180, 8132am etc., to allow one or more alternate communications pathways using electromagnetic energy, which may be changed to correspond to changing data. Electromagnet(s) 8135 may perform a variety of different functions, including working as an active or passive device in association with other components of the device 110. For example, when an electromagnet 8135 is used instead of a permanent magnet (non-electromagnetic) in the devices of Figure 3, a pulse of energy may be delivered to the Hall effect sensor in another device. The other device receiving the pulse may accordingly activate its NFC circuit. A WiFi connection, for example, in the alternative may be established if an NFC and/or Bluetooth connection is not established. Other modules 8130N may include, for example, software that interoperates with the magnetic sensor 8134 and any magnet or electromagnet 8135 or other magnetic circuitry that may be included within the overall electromagnet 8135.

In addition, personal information manager (PIM) application module(s) 8130F may be or include one or more native modules installed during manufacture. PIM(s) 8130F may be capable of organizing and managing data items, such as email, contacts, calendar events, voice mails, appointments, and task items. The PIM application is also capable of sending and receiving data items via a wireless network. The PIM data items are seamlessly integrated, synchronized and updated via the wireless network with the device user's corresponding data items, such as may be stored in the cloud or as may be associated with a host computer system, for example.

Communication functions, including data and voice communications, may be performed through the communications subsystem 8101, and/or through the short-30 range communications subsystem 8102, which may be part of the circuitry contained in device 810. The specific design and implementation of the communications subsystems 8101 and 8102 may be dependent upon the communications network in which the mobile device 810 is intended to operate.

Such communication functions may, as referenced above, be carried out by data module 81306, voice module 8130A, and web module 8130D, including at the instruction of NFC module 8130C in accordance with the disclosed embodiments, with security for these communications, such as in the granting of access to PIM module 8130F, overseen by a security module 8130D. A security module 8130D may include one or more native or non-native security applications, including anti-virus/anti-malware applications or functions, and protection of PIM information via applications or functions, during external interactions, may occur via NFC or via the Web, for example. Accordingly, security module 8130D may allow for degrees of security in interacting with other devices, such as the aforementioned tags, and/or other devices such as servers (herein defined to include any device acting as an Internet, intranet, extranet, or other public or private network node, host, server, or the like), and particularly with devices or aspects of a device that enable the occurrence of communication exchanges by the device occur over a network, such as the Internet.

As previously noted, NFC processes may be conducted according to any of a wide variety of wireless, short-range communications protocols. Such protocols typically comprise sets of standards to enable devices 110, 120, such as smartphones and the like, to establish radio communication with each other by bringing them into close proximity, or by touching them together. Applications include wireless data transactions and simplified setup of communication sessions involving other communication technologies, such as Wi-Fi and Bluetooth. Communication is also possible between a powered NFC device and a powered or unpowered NFC "tag" or button. Suitable standard currently in use are have been p promulgated by the NFC Forum, which was founded in 2004 by Nokia, Philips and Sony, and which now has more than 160 members. The NFC Forum also promotes NFC and certifies device compliance.

Standards have been developed that cover both NFC Forum - sanctioned communication protocols and other short-range wireless data exchange (NFC) formats. Specifically, an example of NFC standards ISO/IEC 18092 /ECMA-340; Near Field Communication Interface and Protocol-1 (NFCIP-1); ISO/IEC 21481 / ECMA-352; and Near Field Communication Interface and Protocol-2 (NFCIP-2). NFC also encompasses a variety of pre-existing standards including ISO/IEC 14443 both Type A and Type B, and FeliCa. The standards specify the NFC air interface, modulation schemes, coding, transfer speeds, and frame format of the RF interface of NFC devices. The standards also comprise initialization schemes and conditions required for data collision-control during initialization for both active and passive NFC modes. In addition, they define a transport protocol, including protocol activation and data-exchange methods.

NFC protocols sanctioned by the NFC forum typically operate within a globally available and unregulated radio frequency band of 13.56 MHz, and generally have a working distance of up to about 20 centimeters. Three data rates are currently defined in the NFC standards: 106 kilobits per second (kbit/s); 212 kbit/s; and 424 kbit/s.

In addition, the NFC Forum has defined a common data format called NFC Data Exchange Format (NDEF), which can store and transport various kinds of items, such as MIME-typed objects and URLs. The NFC Forum also added the Simple NDEF Exchange Protocol for sending and receiving messages between two NFC-enabled devices.

All of the above-mentioned standards and formats, along with any other existing and applicable NFC standards, are incorporated herein by reference as if fully set forth in their entirety, in their finalized condition.

Both passive and active communications modes have been defined. In active communication modes, both an initiator device and a Target device may generate their own NFC fields 1000 (see e.g., Figures 1 and 2). The initiator device may start the NFC communication, with the target device responding to commands received from the initiator device, as appropriate, by modulating the NFC field 1000 generated by the Target device.

Between two active NFC devices 110, either or both devices can act as either initiator or target. In passive communication mode, one of the devices lacks, or does not employ an ability to independently create an electro-magnetic NFC carrier field 1000, and therefore generally does not serve as an initiator.

As previously noted, systems 100, and devices 110, 120, 950 in accordance with the disclosure can be used to significant advantage in a very wide variety of applications.

For example, systems 100, devices 110, 120, 950, etc., and process in accordance with the disclosure can be used to great advantage in facilitating sharing of data files and other information among groups of people and businesses, including for example, families, friends, and/or business entities, colleagues or contacts. Files and information shared can, for example, represent still and video images, audio recordings, text or multi-media documents, etc., and can be quickly and conveniently shared between NFC-enabled devices, according to various user-selected criteria, by means of cloud-based (i.e., remote, networked) resources.

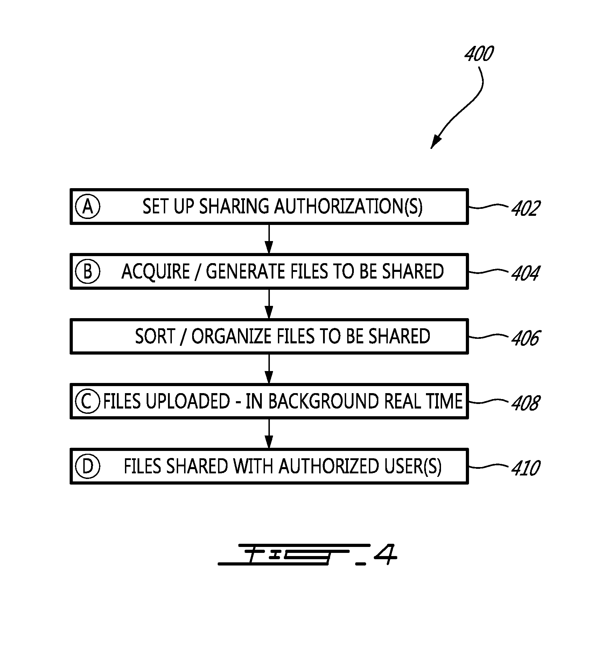

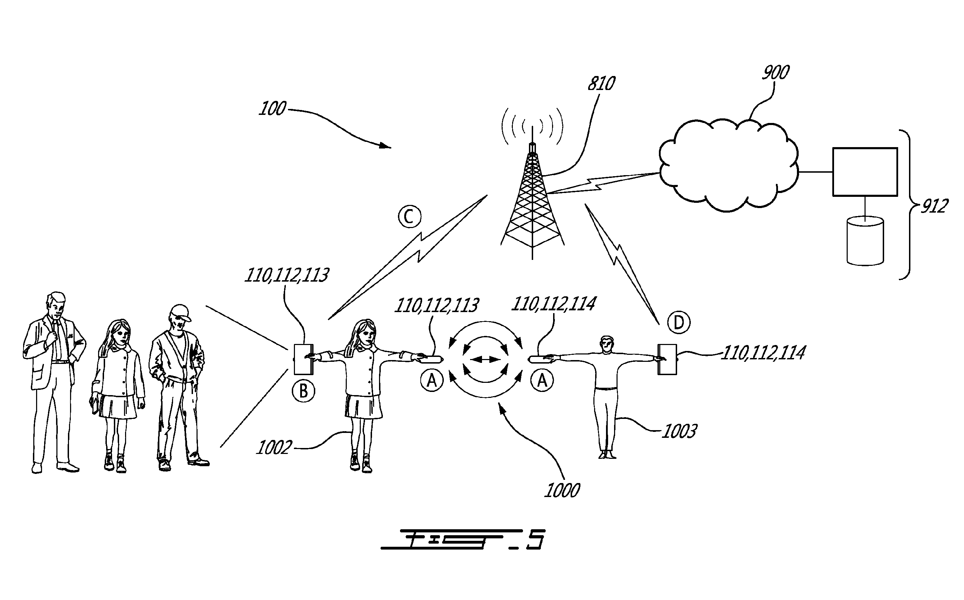

Figure 4 provides a schematic flow diagram of a process 400 useful for sharing data files and other information in accordance with the disclosure. Process 400 is suitable for implementation using system(s) 100 and various combinations of devices 110, 112, 950, and 912, 914, etc., as shown for example in Figures 3 and 5.

At 402, sharing authorizations to be associated with one or more data files or other information data sets are set up. For example, a first user 1002 of an NFC enabled device 110, 112 who has decided to share files with a second user 1003 of a second NFC-enabled device 110, 112, invokes a file-sharing application on her device 110, 112, 113.

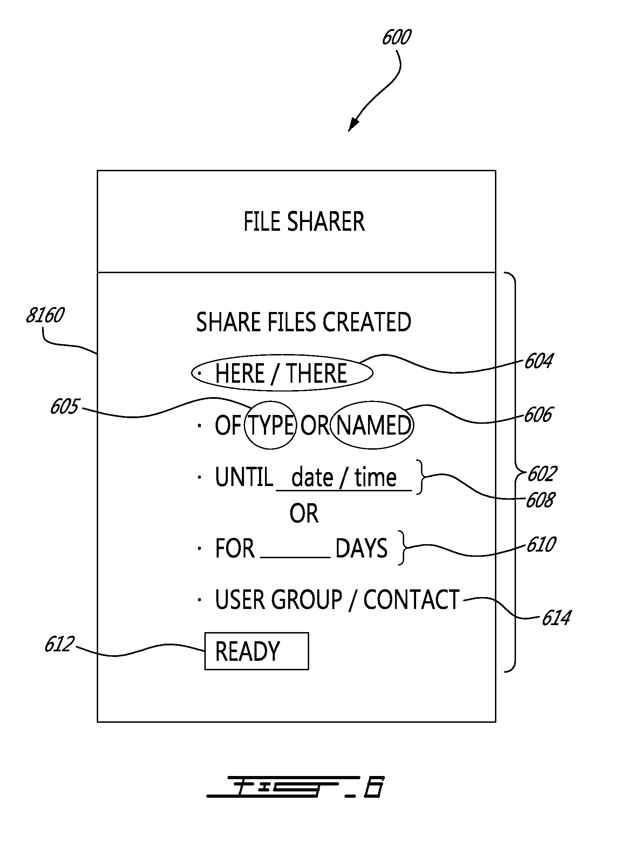

Upon invocation by the user 1002 of the file-sharing application, user 1002's device 110,112,113 (shown for example in Figure 5) can, for example generate and display, on one or more touch-screen displays 8160 of the device 113, a user interface 600 such as that shown in Figure 6. By touching corresponding portions of the touch screen 8160, the user 1002 can designate one or more criteria to be associated with files to be shared with the second user 1003 via the second user's device 114. For example, by touching or otherwise selecting (using for example a touch pad 740, 8141 and/or a keypad 8140) corresponding portions of the interface 602, the user can designate one or more sets of files to be shared based on, for example, a current location, or another geographic location, 604 where a file was created; type of file (e.g., still or video images, text-based or multi-media documents, etc.) 605; or a designated whole and/or partial file names 606. The permissions may be set up to be valid, for example, until a designated time 608, which may correspond to either a given hour or a given calendar date or for a designated period of time 610 (e.g., days, weeks, hours, minutes, etc) One or more contacts and/or user groups 614 with which the files may be shared may also be set.

When the user 1002 is satisfied with the selections made, the user can so designate by, for example, touching or otherwise selecting an option such as "READY" 612. Selection of option 612 can result in generation, for example by one or more processors 8180 of the user device 113, of a folder or other data set comprising corresponding file identifiers to be associated with files to be shared according to the designated criteria.

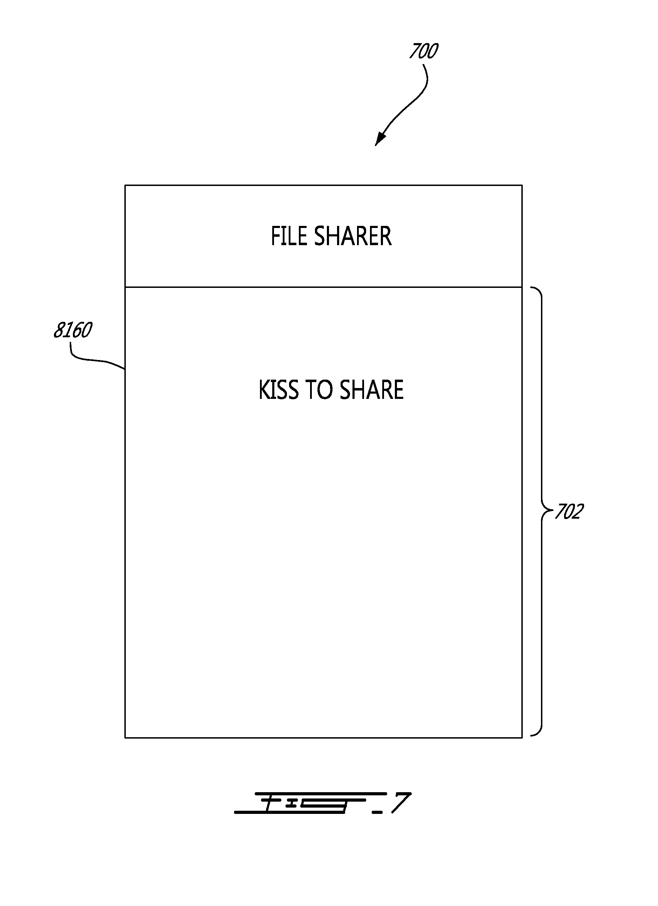

In order to complete the file sharing authorization process, when the identifiers corresponding to the desired criteria have been generated, user 1002's device 113 can for example generate and display, on one or more touch-screen displays 8160 of the device 113, a user interface 700 such as that shown in Figure 7, prompting the user 1002 to place her device 113 within NFC transfer proximity of a second user 1003's device 114, as shown for example at (A) in Figure 5. By placing her device 113 into sufficiently close proximity (e.g., by lightly tapping or otherwise contacting second user 1003's device 114) the user 1002 can cause the user devices 113, 114 to exchange any further required or desired transfer and/or authorization information, including for example suitable device, application, and/or personal identifiers, including for example telephone numbers, URLs, and pre-established or special purpose passwords and/or personal identification numbers (PINs), in accordance with NFC data transfer processes described herein. Any data received by the user device 113 from the user device 114, may either be directly included or modified for inclusion into the corresponding identifier. Accordingly, the identifier may include data based at least partly on data received from the user device 114.

With authorization criteria based on suitably-designated identifiers, etc., established, at 404 the user 1002 can generate and/or otherwise acquire data files or information data sets to be included in the designated share group. For example as shown at (B) in Figure 5 and described elsewhere herein, the user 1002 can use input devices of her device 113, such as still and/or video camera(s) 8246 and/or microphone(s) 8112, to generate data files to be shared.

At 406, user 1002's device 113 can automatically or semi-automatically sort and tag, or otherwise organize, files generated or otherwise acquired at 404, by, for example associating any or all authorization criteria and/or identifiers generated at 402 with the files as they are acquired.

At 408, and as shown at (C) in Figure 5, user 1002's device 113 can automatically or semi-automatically upload sorted and/or tagged files to cloud-based storage by, for example, routing the files to one or more remote resources, such as a data base or other memory associated with a remote server 912, using any one or more of wireless communications (sub)systems 8101, 8102, 8132, etc. Such processes may be conducted under, for example, control of the device 113's processor(s) 8180, 8158, 8132, etc., and operating system, either in the background or in real time, at the option of the user 1002, remote resource(s) 912, and/or the device 113.

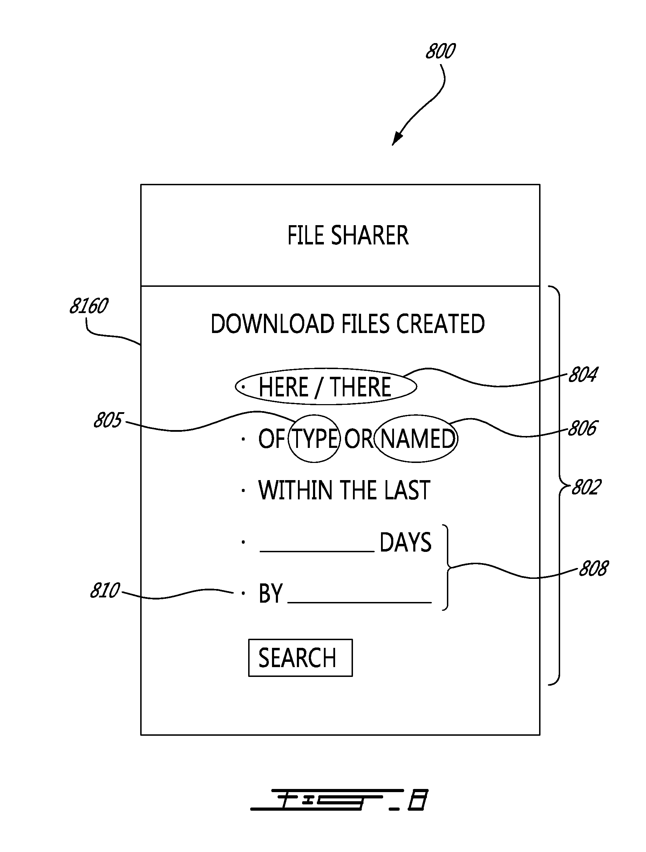

At 410, and as shown at (D) in Figure 5, one or more second users' device's 113 can download files shared at 408 to, for example memory(ies) 8116, 8118, or other designated local and/or remote memory(ies). Downloading can, for example, continue automatically as a background process on the device(s) 113 for so long as the criteria designated at 402 are satisfied and any other authorizations established at that or any other time remain valid. Optionally, downloading to device(s) 113 can be accomplished in real time, for example at the option of the second user(s) 1003, by for example accessing a file sharing application interface 800 such as that shown in Figure 8. Through use of such an interface and corresponding input mechanisms, as described herein, a user 1003 can designate any one or more criteria 802, 804, 805, 806, 808, 810, etc., for real-time or other immediate downloading, under the control of his/her device's processor(s) 8180, etc.

Optionally, at, before, or after one of steps 402, 404, 406, and 408, the first user's device 113 may transmit data to the second user's device 114, preferably using a NFC data transfer. The transmitted data may represent an authorization for the second user's device 114 to access the files shared at 408. In addition to any other established authorizations, the second user's device 114 may authenticate itself to the remote resource(s) 912 to access the files shared at 408 by using transmitted data or data derived thereof. For example, the transmitted data may include a subset of the data included in the identifier, or the transmitted data may be based at least partly on the identifier. In order for the second user's device 114 to be aware of the location of the files shared at 408, the first user's device 113 may optionally transmit, using a NFC data transfer, a reference to the files shared at 408. The reference may include a URL address, IP address, or other reference usable by the second user's device 114 to initiate communications with the remote resource(s) 912 by attempting to resolve the reference to a network address and contacting the remote resource(s) 912.

In an implementation of the present invention, after preparing the files for sharing, either before or after uploading the files and/or identifier to the remote resource(s) 912, the first user's device 113 may also transmit the prepared files either directly to the second user's device 114 using a NFC data transfer, or over a communications network to the second user's device 114. This implementation may be preferable where the first user is desirous of both establishing sharing of files for later retrieval and of delivering the shared files to the second user's device 114 quickly, without having to wait for the second user to attempt to retrieve the shared files from the remote resource(s) 912. In order to transmit the prepared files over the communications network to the second user's device 114, the first user's device 113 may have maintained a reference of the second user's device 114, resolvable into a network address associated with the second user's device 114. This reference may be obtained using a NFC data transfer between devices 113 and 114, by manually inputting the reference into the first user's device 113, by receiving the reference through an email or other notification, or by other means. Optionally, the first user's device 113 may upload the reference of the second user's device 114 to the remote resource(s) 912 or the second user's device 114 may upload such a reference directly to the remote resource(s) 912 to be associated with any identifier(s) granting shared file access privileges to the second user 1003. The first user 1002 may configure the remote resource(s) 912 to automatically either upon uploading, or at a predetermined time, transmit the shared files to the second user's device 114. The remote resource(s) 912 may initiate communication with the second user's device 114 by resolving the reference to a network address associated with the second user's device 114 and transferring, or pushing, the shared file to the second user's device 114.

As will be understood by those skilled in the relevant arts, once they have been made familiar with this disclosure, a user 1002 of first device 113, and optionally one or more second users 1003 of device(s) 114, can modify any one or more of the criteria established at 402 to either enable extended downloading / sharing privileges, or curtail them as desired or otherwise appropriate. Moreover, bi-directional authorization criteria may be negotiated at 402, rather than unilaterally imposed by the first device 113, and/or restrictions may be enforced or otherwise imposed by the cloud-based storage device(s) 912, etc.

Similarly, user(s) 1002 can re-organize shared files according to any desired criteria after uploading, by accessing suitable-configured applications and user interfaces.

Optionally, the remote resource(s) 912 may be configured to group the files shared at 408 in a shared folder accessible by the second user's device 114 according to the at least one access criterion. For example, the first user may acquire, prepare, and upload multiple files to the remote resource(s) 912 in one session, or the first user may acquire, prepare, and upload single or multiple files over a prolonged period of time, possibly throughout a single day, or over a longer period of time. In an attempt to possibly reduce the amount of time spent by the user inputting and changing sharing privileges of files uploaded to the remote resource(s) 912, the user 1002 of the first device 113 may specify a default identifier or access criterion to be applied to each file uploaded to the remote resource(s) 912. The remote resource(s) 912, upon receiving such files and identifier or access criterion, may group the received files in shared folders according to that identifier or access criterion. In this way, the first user 1002 may define shared folders accessible by users 1003 of one or more device(s) 114, without having to re-acquire either data from the device(s) 114 or provide updated references to the shared folders to each of the device(s) 114. The first user 1002 may then optionally modify the identifier or access criterion of all of the files shared in a particular shared folder on the remote resource(s) 912 simultaneously by changing the identifier or access criterion associated with the shared folder, or by a batch process applying changes to each file associated with the shared folder, or by other process, using the interface 600.

As the first user 1002 may share many files over a prolonged period of time, it may also be advantageous to inform the first user 1002 of the status of each of the shared files. The first user 1002 may forget which files were shared with whom. The first user 1002 may have a different opinion regarding the access privileges for shared files after a period of time has elapsed. In an implementation of the present invention, the remote resource(s) 912 or the first device 113 itself may present a visual, audio, tactile, or other indication that files are either being shared or are marked as shareable with at least one user 1003. Through a suitable interface, such as interface 600, the first user 1002 of the device 113 may configure the device 113 or the remote resource(s) 912 to provide such an indication after a predetermined time, including 1 hour, 2 hours, 1 day, 1 week, 1 month, or any other time after either uploading a file to be shared or modifying the access privileges of a shared file. Such an indication may be further sent by email to an email address associated with the first user 1002 and registered with the remote resource(s) 912, or by letter mail to a letter mailing address associated with the first user 1002 and registered with the remote resource(s) 912.

The first user 1002 may also wish to share files created at a specific location or during a specific function, such as a birthday party or sporting event. In order to simplify the sharing process, the first user 1002 may toggle all files subsequently created, optionally including files pre-existing on first device 112 created during a specific time window, to be eligible for sharing in accordance with one or more identifiers including at least one access criterion. However, the first user 1002 may not remember to disable sharing for files created after the event or specific time period has elapsed. Accordingly, the first device 112 or the remote resource(s) 912 may be optionally configured to cease sharing of files created or otherwise acquired by first device 112 after a predetermined time period has elapsed. Optionally, the first device 112 or the remote resource(s) 912 may also be configured to cease sharing all files previously flagged for as eligible for sharing after a predetermined time. These optional features may allow for the risk of the first user unintentionally sharing files created or acquired by first device 112 to be reduced.

In another implementation, the first user's device 113 may receive from the second user's device 114 a reference to a second networked storage resource associated with the second user's device 114. The first user's device 113 may receive this reference during any one of steps 402, 404, 406, 408, or thereafter either by a NFC data transfer, over a communications network, by manually entering the reference through an interface of the first user's device 113, or by other means. The reference may be in the form of a URL, IP address, or other reference usable by the first user's device 113 or the remote resource(s) 912 to initiate communications with the second networked storage resource by attempting to resolve the reference to a network address and contacting the second networked storage resource. The first user's device 113 may upload the reference of the second networked storage resource to the remote resource(s) 912. Alternatively, the second user's device 114 may upload the reference to the second networked storage resource directly to the remote resource(s) 912 in order to associate the reference with any identifier(s) granting shared file access privileges to the second user 1003. At step 408, or some time later, the first user 1002, through suitable interface, for example interface 600, may direct the remote resource(s) 912 to initiate communication with the second networked storage resource over the communications network 900 and transmit the at least one stored file eligible for sharing with the second user 1003 to the second networked storage resource. In this way, the second user 1003 may maintain the second user 1003's own cloud storage of files that were at one time shared with the second user 1003. This may be advantageous where the first user 1002 is desirous of sharing files with second user 1003, but does not wish to maintain the files on remote resource(s) 912 indefinitely. Transferring the shared files to the second networked storage resource accessible by the second user 1003, optionally using the second user's device 114 may permit the first user 1002 to delete the shared files from the remote resource(s) 912 while still sharing the files with the second user 1003.

In further aspects, the disclosure provides systems, devices, methods, and computer programming products, including non-transient machine-readable instruction sets, for use in implementing such methods and enabling the sharing of such data files and/or information.

Although the disclosure has been described and illustrated in exemplary forms with a certain degree of particularity, it is noted that the description and illustrations have been made by way of example only. Numerous changes in the details of construction and combination and arrangement of parts and steps may be made. Accordingly, such changes are intended to be included in the invention, the scope of which is defined by the claims.

Except to the extent explicitly stated or inherent within the processes described, including any optional steps or components thereof, no required order, sequence, or combination is intended or implied. As will be will be understood by those skilled in the relevant arts, with respect to both processes and any systems, devices, etc., described herein, a wide range of variations is possible, and even advantageous, in various circumstances, without departing from the scope of the invention, which is to be limited only by the claims.

## Claims

1. A method, performed by a near-field communication (NFC) enabled device, comprising:
using an NFC data transfer, authorizing sharing of a set of data files with a second NFC-enabled device;
acquiring at least one file to be shared with the second NFC-enabled device, and associating the at least one file with an identifier indicating that the file is eligible to be shared; and
uploading at least one file identified as eligible for sharing with the second NFC-enabled device to a networked storage resource, for storage in a shared folder accessible by the second NFC-enabled device.

2. The method of claim 1 wherein the identifier indicating that the file is eligible to be shared is determined based at least partly on data received from the second NFC-enabled device, and optionally wherein the identifier comprises a reference enabling the networked storage resource to communicate with the second NFC-enabled device.

3. The method of any preceding claim, comprising transmitting to the second NFC-enabled device data representing an authorization for the second NFC-enabled device to access the at least one file from the shared folder.

4. The method of any preceding claim comprising transmitting the file identified as eligible for sharing to the second NFC-enabled device over a communications network.

5. The method of any preceding claim comprising, using a NFC data transfer, transmitting the file identified as eligible for sharing to the second NFC-enabled device.

6. The method of any preceding claim comprising modifying a sharing eligibility criterion of the at least one file in the shared folder.

7. The method of any preceding claim comprising associating a predetermined time limit during which the file identified as eligible for sharing is eligible for sharing with the second NFC-enabled device.

8. A method, performed by a networked storage resource, comprising:
receiving over a communications network, from a first NFC-enabled device, at least one data file, the data file associated with an identifier authorizing at least a second NFC-enabled device eligible to access the data file;
storing the at least one received data file in secure, persistent storage;
receiving over the communications network a request from at least the second NFC-enabled device for at least read access to the at least one stored data file; and
based at least partly on a comparison of the identifier with at least one access criterion, authorizing at least read access to the at least one stored data file by at least the second NFC-enabled device.

9. The method of claim 8, wherein the criterion corresponds to at least one of a location, a file type, a current time, an elapsed time, a personal identifier, and a device identifier.

10. The method of claim 8 or claim 9 wherein the storing step comprises grouping the at least one received data file in a shared folder accessible by the second NFC-enabled device according to the at least one access criterion, and optionally comprising modifying sharing eligibility of the grouped data files in accordance with an access change request received from the first NFC-enabled device.

11. The method of any of claims 8 to 10 wherein the identifier is determined based at least partly on data received from the second NFC-enabled device.

12. The method of claim 11 wherein the request from at least the second NFC-enabled device comprises data from the first NFC-enabled device.

13. The method of claim 11 or claim 12 comprising initiating communication with the second NFC-enabled device over the communications network at least partly by using the identifier; and transmitting the at least one stored file to the second NFC-enabled device.

14. The method of any of claims 11 to 13 comprising initiating communication with a second NFC networked storage resource associated with the second NFC-enabled device at least partly by using the identifier; and transmitting the at least one stored file to the second networked storage resource.

15. The method of any of claims 8 to 14 comprising, after a predetermined time elapses from the receiving of the at least one data file from the first NFC-enabled device, transmitting a notification to the first NFC-enabled device to update the at least one access criterion of the at least one stored file.

16. A NFC-enabled device comprising:
a processor;
a medium or media including machine-readable instructions executable by the processorto:
use an NFC data interchange to authorize sharing of a set of data files with a second NFC-enabled device;
acquire at least one file to be shared with the second NFC-enabled device, and associate the at least one file with an identifier indicating that the file is eligible to be shared; and
upload at least one file identified as eligible for sharing with the second NFC-enabled device to a networked storage resource, for storage in a shared folder accessible by the second NFC-enabled device.

17. The NFC-enabled device of claim 16 wherein the identifier indicating that the file is eligible to be shared is determined based at least partly on data received from the second NFC-enabled device; and the machine-readable instructions executable by the processor to upload the identifier to the networked storage resource.

18. A networked storage resource comprising:
a processor;
a medium or media including machine-readable instructions executable by the processorto:
receive over a communications network, from a first NFC-enabled device, at least one data file, the data file associated with an identifier authorizing at least a second NFC-enabled device eligible to access the data file;
store the at least one received data file in secure, persistent storage;
receive over the communications network a request from at least the second NFC-enabled device for at least read access to the at least one stored data file; and
based at least partly on a comparison of the identifier with at least one access criterion, authorize at least read access to the at least one stored data file by at least the second NFC-enabled device.

19. A computer program product having a non-transitory computer readable medium tangibly embodying computer executable code which, when executed by a processor of a NFC-enabled device, causes the NFC-enabled device to:
use an NFC data interchange to authorize sharing of a set of data files with a second NFC-enabled device;
acquire at least one file to be shared with the second NFC-enabled device, and associate the at least one file with an identifier indicating that the file is eligible to be shared; and
upload at least one file identified as eligible for sharing with the second NFC-enabled device to a networked storage resource, for storage in a shared folder accessible by the second NFC-enabled device.

20. A computer program product having a non-transitory computer readable medium tangibly embodying computer executable code which, when executed by a processor of a networked storage resource, causes the networked storage resource to:
receive over a communications network, from a first NFC-enabled device, at least one data file, the data file associated with an identifier authorizing at least a second NFC-enabled device eligible to access the data file;
store the at least one received data file in secure, persistent storage;
receive over the communications network a request from at least the second NFC-enabled device for at least read access to the at least one stored data file; and
based at least partly on a comparison of the identifier with at least one access criterion, authorize at least read access to the at least one stored data file by at least the second NFC-enabled device.
